# EUROPEAN PATENT SPECIFICATION

(11) **EP 1 371 614 B1**
(45) Date of publication and mention of the grant of the patent: **18.08.2010**
(21) Application number: 02254032.2
(22) Date of filing: 10.06.2002
(51) Int. Cl.: C02F 11/14

(54) **Process for treating sludge involving a particular shear stirrer**
Verfahren zur Behandlung von Schlämmen wobei ein besonderes Scherrührwerk eingesetzt wird
Procédé de traitement des boues impliquant un agitateur à cisaillement particulier

(43) Date of publication of application: 17.12.2003
(73) Proprietor: The Saitama Livestock Farm (Saiboku) Co. Ltd., Hidaka-City, Saitama 350-1221 (JP)
(72) Inventor: Miura, Nobuyoshi, c/o The Saitama Livestock Farm, Hidaka-City, Saitama, 350-1221 (JP)
(74) Representative: White, Duncan Rohan

(56) References cited:
- GB-A- 2 129 786
- US-A- 5 624 550
- US-A- 5 938 936
- US-A1- 2001 042 721
- US-B1- 6 245 121

## Description

### BACKGROUND OF THE INVENTION

### 1. Field of the Invention

The present invention relates to a process for treating sludge, more particularly, to a process for purifying sludge from a clean water processing plant, a sewage treatment plant, a night soil treatment station, a farm community wastewater treatment plant, a stock raising wastewater treatment plant or various types of plant wastewater disposal plants.

### 2. Description of the Related Art

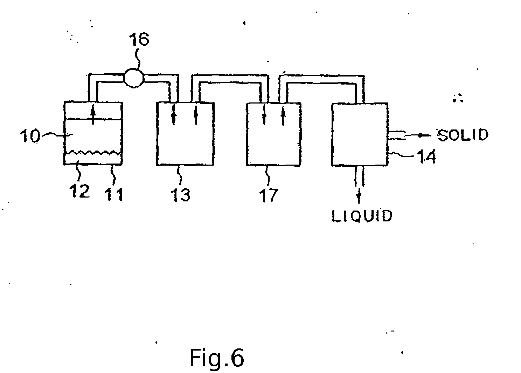

Processing of dissolved solids separated and removed from a target region for purification, raw sludge, and excess sludge produced from activated sludge process equipment has been heretofore performed. As illustrated in Fig. 6, a conventional processing of sludge is performed by removing, in a raw water tank 11, floating solid 12 contained in sludge by gravity sedimentation, supplying suspended solid and fine floating solid which are in supernatant 10 and cannot be readily removed by the gravity sedimentation only by use of a sludge supply pump 16 to a first flocculating and mixing tank 13, stirring them in the tank 13 together with a first flocculating agent supplied thereto (usually at about 300 rpm since high speed stirring is a cause of inhibition of flocculation), supplying the mixture to a second flocculating and mixing tank 17 over about 3 to 5 minutes, stirring it in the tank 17 together with a second flocculating agent supplied thereto to form flocks due to flocculation with the flocculating agent, sending them from the second flocculating and mixing tank 17 to a solid-liquid separator 14, and dehydrating the flocks by the solid-liquid separator 14 to separate them into a solid and a liquid, which are discharged separately. In this case, various apparatuses and flocculating agents have been developed in order to facilitate solid-liquid separation by the solid-liquid separator 14. Pipes used in this apparatus usually have an inner diameter of 50 mm (50 φ) and a flow rate of about 12 tons/hour (t/h).

The conventional process for treating sludge has the following problems.
(1) As shown in Fig. 6, the flocculating and mixing tank 13,17 for mixing with a flocculating agent must be installed between the raw water tank 11 and the solid-liquid separator 14, so that a place for installing it has to be secured and installation cost is also required.
(2) Since the stirred suspended solid and fine floating solid must be retained in the flocculating and mixing tank 13,17 for a time necessary for the progress of flocculation reaction, sludge treatment takes much time.
(3) In order to prevent destruction of flocks formed in the flocculating and mixing tank 13,17, vigorous stirring cannot be performed in the flocculating and mixing tank 13,17. As a result, handling is cumbersome and in addition dispersion of a flocculating agent is not performed efficiently and only those flocks that are much water-swollen are obtained. Accordingly, water separation is low and dehydrated cake with a low water content cannot be obtained in the solid-liquid separator 14. Further, the use amount of the flocculating agent, production amount of dehydrated cake and use amount of a moisture controlling agent as a compost material are increased, which is uneconomical. Furthermore, performing the treatment for the moment is given priority, with the possibility of causing secondary pollution with respect to the quantity and quality of sludge being unsolved, thus failing to give a fundamental solution.

### SUMMARY OF THE INVENTION

An object of the present invention is to provide a process for treating sludge that can solve the above-mentioned problems by forming dense and less water-swollen flocks or aggregate structure type flocks.

The characteristics of the present invention is matching of the flocculating action with physical conditions exerted on the chemical reaction of a chemical thus far overlooked, that is, distributing, dispersing or diffusing the flocculating agent in a state of fine particles throughout the target wastewater before the reaction of the flocculating agent, and adjusting the treating line in which the wastewater flows such that during the time from the initiation to the termination of the reaction the wastewater flows in a laminar flow. The present invention is also characterized in that a flocculating agent is dispersed, diffused or distributed throughout sludge before the flocculation reaction of the flocculating agent is initiated, and that the time at which flocculation strength of flocks formed by the flocculation reaction of the flocculating agent is maximum is experimentally confirmed in advance and the distances between the apparatuses are set such that the solid-liquid separator is set at a location where at such time the flocks can reside by the solid-liquid separator, thus giving flocculating effect and water separating effect better than ever, so that stabilization of running of the sludge processing equipment as a whole and simplification of handling and economical effect can be obtained.

US-A-5624550 discloses supplying untreated sludge to a continuous kneading mixer together with diluting water for diluting the sludge. Supplying the diluted sludge to a dehydration machine. The diluted sludge is firstly added with an inorganic flocculating agent and is mixed in a first blender and is then added with a high density flocculating agent and mixed in a second blender. The agitation must be gentle to avoid shear which could redisperse the floc.

Thereafter the sludge is supplied to a belt press dehydrating machine.

GB-A-2129786 discloses separation of solids and liquids in an aqueous dispersion by adding a flocculating agent while flowing through a pipe, and then subjecting the flowing aqueous dispersion to a flow restriction to mix the flocculating agent and to flocculate the solids. The dispersion is discharged onto a surface allowing free liquid run-off and deposition of the floc.

US2001042721 describes a high-speed process for dewatering of slurries from hydraulic dredges which involves flocculating the slurry using a flocculating agent, delivering the flocculated slurry through a diffuser and filtering the slurry. This process employs a mixer, such as a three-bladed paddle, and a rapid dewatering unit. It is disclosed that, if the mixing speed may be adjusted for efficient flocculation of the sludge slurry. If the mixing speed is too slow, the flocculating agent will be insufficiently dispersed. If the mixing speed is to fast, the forming floccules will be sheared.

The invention provides a process for treating sludge, in a treating sludge system having a sludge supply pump (6) introducing a sludge from a raw water tank (7) and a liquid shear-stirrer (20) provided downstream of the sludge supply pump (6) and a shear-stirring tank (26) accommodating the rotatable liquid shear -stirrer (20)and a solid-liquid separator (5) positioned downstream of the liquid shear-stirrer (20), connected together by a pipe to construct a sludge treatment line (1) and the liquid shear-stirrer (20) having a rotating shaft (23) having a disk (24) attached thereto and provided with a series of vanes (25), formed directed upwardly, horizontally and downwardly; comprising the steps of:
adding to sludge flowing in the sludge treatment line (1) a flocculating agent for flocculating various materials in the sludge, at a flocculating agent injection part (3) positioned upstream of the liquid shear-stirrer (20) of the sludge treatment line (1);
shear-stirring the flocculating agent-added sludge flowing in the sludge treatment line (1) by rotating the liquid shear-stirrer (20) at a speed of 200 to 2000 rpm in the shear-stirring tank (26) prior to initiation of flocculation reaction of the flocculating agent to make the flocculating agent-added sludge in a fine particulate state, dispersing, diffusing or distributing the flocculating agent throughout the sludge in the sludge treatment line (1)
allowing the sludge in a fine particulate state to form flocks in a particle state as a result of the flocculation reaction of the flocculating agent;
adjusting the treating line in the waste water flows such that wastewater flows in a laminar flow during the flocculation reaction; and
separating the flocks into a solid and liquid by the solid-liquid separator (5).

The invention may provide a process for treating sludge wherein a first flocculating agent injection part (3) and a second flocculating agent injection part (4) are arranged in the sludge treatment line (1), the first flocculating agent injection part (3) is positioned upstream of the liquid shear-stirrer (20), and a second flocculating agent injection part (4) is arranged downstream of the liquid shear-stirrer (20); comprising: adding to the sludge a second flocculating agent at the second flocculating agent injection part (4)

The invention may provide a process for treating sludge wherein a second liquid shear-stirrer (21) is provided downstream of the second flocculating agent injection part (4), comprising, after adding the second flocculating agent, shear-stirring the flocculating agent-added sludge flowing in the sludge treatment line (1) by rotating the second liquid shear-stirrer (21) at a speed of 200 to 2000rpm to make the flocculating agent-added sludge in a fine particulate state to disperse, diffuse or distribute the first flocculating agent throughout the sludge in the sludge treatment line (1).

### BRIEF DESCRIPTION OF THE DRAWINGS

In the accompanying drawings:
Fig. 1 is a diagram illustrating Embodiment 1 of the present invention;
Fig. 2 is a diagram illustrating Embodiment 2 of the present invention;
Fig. 3 is a diagram illustrating Embodiment 3 of the present invention;
Fig. 4A is a diagram illustrating the liquid shear-stirrer in the present invention, Fig. 4B is a diagram illustrating details of the vanes of the liquid shear-stirrer shown in Fig. 4A;
Fig. 5 is a diagram illustrating a process for forming a flocks, a flock of aggregate structure, and a block in the present invention; and
Fig. 6 is a diagram illustrating a conventional treating apparatus.

### DETAILED DESCRIPTION

Embodiments 1 to 3 of the process for treating sludge according to the present invention relate to a process in which a flocculating agent is added to raw sludge separated and removed from target wastewater purification region and excess sludge removed from activated sludge apparatus and the sludge is shear-stirred by a liquid shear-stirrer to disperse, diffuse or distribute the flocculating agent throughout the sludge, thus flocculating the sludge with the flocculating agent in a conditioned manner to form flocks and to form dense and less water-swollen, aggregate structure type flocks (that presumably are constituted to have the same particulate structure as that of the aggregate structure of soil), so that solid-liquid separation by a dehydrator can be facilitated.

### Embodiment 1

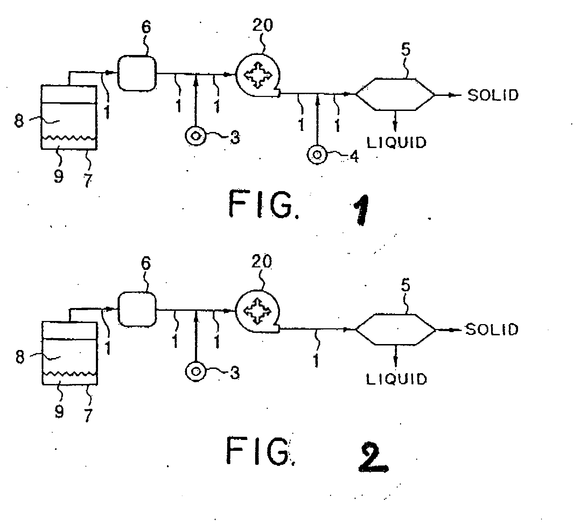

As shown in Fig. 1, Embodiment 1 relates to the case where a flocculating agent is injected to a sludge treatment line 1 at two points. In Fig. 1, a pipe such as a vinyl chloride pipe or a VSC hose connects between a raw water tank 7 and a sludge supply pump 6, between the sludge supply pump 6 and a liquid shear-stirrer 20, and between the liquid shear-stirrer 20 and a solid-liquid separator 5 to construct a sludge treatment line 1. As the pipe, a pipe made of a material other than the resin, such as a metal-made pipe, may be used. The inner diameter of the pipe may vary depending on the utility; for example, a pipe having an inner diameter of 80 mm (80 φ) and ensuring a flow rate of about 20 t/h may be used.

In Embodiment 1 shown in Fig. 1, sewage, night soil, farm community waste water, stock raising waste water, and various types of plant waste waters and the like (these being called collectively as "sludge,") are pooled in the raw water tank 7, in which solids 9 having large particle sizes, such as stones, concrete debris, metal pieces, and wood pieces are precipitated by gravity sedimentation. Supernatant 8 of the sludge settled by gravity in the raw water tank 7 is introduced into the sludge treatment line 1 by the sludge supply pump 6. The flocculating agent is injected at a first flocculating agent injection part 3 and a second flocculating agent injection part 4.

As the flocculating agent, a cationic flocculating agent (acidic, for example, poly (iron chloride), etc.), an anionic flocculating agent (alkaline), a nonionic flocculating agent, and an amphoteric flocculating agent may be used. The flocculating agent is used after dissolving it in a solution and supplied to the sludge treatment line 1 by a liquid injecting pump. In the case where the flocculating agent to be used, for example, a cationic flocculating agent (acidic) for adsorbing components having negative charge in the sludge, is injected at the first flocculating agent injection part 3, an anionic flocculating agent (alkaline) for adsorbing components having positive charge in the sludge is injected at the second flocculating agent injection part 4. In the present invention, the anionic flocculating agent (alkaline) may be injected at the first flocculating agent injection part 3 and the cationic flocculating agent (acidic) may be injected at the second flocculating agent injection part 4.

Injection of the flocculating agent initiates flocculation reaction in the sludge treatment line 1. In the present invention, before the flocculation reaction is initiated, the sludge to which the flocculating agent has been added is shear-stirred by the liquid shear-stirrer 20 to make the sludge and flocculating agent in a fine particulate state, so that the flocculating agent can be dispersed, diffused or distributed throughout the sludge. The distance between the position where the flocculating agent is added to the position where the flocculation reaction is initiated may vary depending on the kind of flocculating agent and flow rate of sludge and therefore, the distance from the first flocculating agent injection part 3 to the installing position of the liquid shear-stirrer 20 is suitably set to a distance calculated based on a flocculation reaction initiation time obtained by checking in advance for each flocculating agent. From experience, this distance is about 0.2 to 0.6 m.

In the present invention, in order for flocks formed in the sludge treatment line 1 after the shear-stirring by the liquid shear-stirrer 20 not to be destructed during their flow in the sludge treatment line 1, the pipe is arranged and the liquid shear-stirrer 20 is positioned such that the sludge flowing in the sludge treatment line 1 is not a turbulent flow but is a laminar flow. For this purpose, the pipe is arranged in a straight line or with a gentle curve, or without steps. The distance from the liquid shear-stirrer 20 to the second flocculating agent injection part 4 and the distance form the second flocculating agent inj ection part 4 to the solid-liquid separator 5 are set to distances calculated based on the reaction time in which the strength of flocks is maximum, which is based on the flocculation lasting time of flocks. From experience, this distance is about 0.2 to 0.6 m.

The solid component (dehydrated cake) separated from the solid-liquid separator 5 and liquid component are separately sent to subsequent steps. For example, the dehydrated cake is sent to a step for compost and the liquid component is sent to a step for microorganism treatment.

### Embodiment 2

The process for treating sludge in accordance with Embodiment 2 of the present invention is illustrated with reference to Fig. 2. In Embodiment 2, a flocculating agent is added by injection at one point (flocculating agent injection part) 3 in the sludge treatment line 1. In this case, as the flocculating agent, a cationic flocculating agent (acidic, for example, poly(iron chloride), etc.) an anionic flocculating agent (alkaline), a nonionic flocculating agent, and an amphoteric flocculating agent may be used singly or in combination of two or more of them.

Also in the case illustrated in Fig. 2, addition of the flocculating agent initiates flocculation reaction in the sludge treatment line 1. In Embodiment 2 as well, before the flocculation reaction due to the flocculating agent is initiated, the sludge to which the flocculating agent has been added is shear-stirred by the liquid shear-stirrer 20 to make the sludge and flocculating agent in a fine particulate state, so that the flocculating agent can be dispersed, diffused or distributed throughout the sludge. This results in that the flocculating agent flocculates suspended solid and fine floating solid in the sludge to form flocks in the sludge treatment line 1.

The distance between the position where the flocculating agent is added and the position where the flocculation reaction is initiated as shown in Fig. 2 may vary depending on the kind of flocculating agent and flow rate of sludge. Therefore, the distance from the first flocculating agent injection part 3 to the installing position of the liquid shear-stirrer 20 is set to a distance calculated based on a flocculation reaction initiation time obtained by checking in advance for each flocculating agent.

Also in Fig. 2, in order for flocks formed in the sludge treatment line 1 not to be destructed during their flow in the sludge treatment line 1, the supply pipe is arranged and the stirring pump is positioned such that the sludge flowing in the sludge treatment line 1 is not a turbulent flow but is a laminar flow. The flocks are separated by the solid-liquid separator 5 and the separated solid component (dehydrated cake) and liquid component are separately sent to subsequent steps in the same manner as in the case illustrated in Fig. 1.

### Embodiment 3

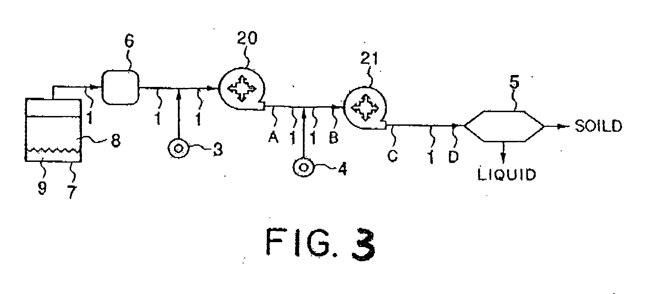

The process for treating sludge in accordance with Embodiment 3 of the present invention is illustrated with reference to Fig. 3. In Embodiment 3, a second liquid shear-stirred 21 is provided between the second flocculating agent injection part 4 and the solid-liquid separator 5 in the sludge treatment line 1, the first liquid shear-stirrer 20 and the second liquid shear-stirrer 21 are used together. The flocculating agent shear-stirred by the second liquid shear-stirrer 21 and dispersed, diffused or distributed throughout the sludge in a fine particulate state flocculates suspended solid and fine floating solid in the sludge to form flocks in the sludge treatment line 1. The number of rotations may vary depending on the material to be treated, but is desirably selected in the rage of about 200 to 2,000 rpm.

In Embodiment 3 illustrated in Fig. 3, the action up to the one before the second liquid shear-stirrer 21 is the same as in Embodiment 1 illustrated in Fig. 1. The difference between Embodiment 3 and Embodiment 1 illustrated in Fig. 3 and Fig. 1 is that the sludge after injection of the second flocculating agent is shear-stirred by the second liquid shear-stirrer 21 to disperse, diffuse or distribute the flocculating agent throughout the sludge in a fine particulate state. In this case as well, before flocculation reaction due to the second flocculating agent is initiated, the sludge is shear-stirred by the second liquid shear-stirrer 21. This results in that the flocculating agent which is dispersed, diffused or distributed throughout the sludge flocculates suspended solid and fine floating solid in the sludge to form flocks in the sludge treatment line 1. The flocks are separated by the solid-liquid separator 5 into solid and liquid and the solid component (dehydrated cake) and liquid component are separately sent to subsequent steps. For example, the dehydrated cake is sent to a step for compost and the liquid component is sent to a step for microorganism treatment.

Also in Fig. 3, in order for flocks formed in the sludge treatment line 1 after the stir by the second liquid shear-stirrer 21not to be destructed during their flow in the sludge treatment line 1, the pipe is arranged and the second liquid shear-stirrer 21 is positioned such that the sludge flowing in the sludge treatment line 1 is not a turbulent flow but is a laminar flow.

The distance between the position where the second flocculating agent is added and the position where the flocculation reaction due to the flocculating agent is initiated as shown in Fig. 3 may vary depending on the kind of flocculating agent and flow rate of sludge. Therefore, in the case of Fig. 3 as well, the distance from the second flocculating agent injection part 4 to the installing position of the second liquid shear-stirrer 21 is set to a distance calculated based on a flocculation reaction initiation time obtained by checking in advance for each flocculating agent. From experience, this distance is about 0.2 to 0.6 m.

The flocculating agent which is used in the Embodiment may be the same as the flocculating agent used in Embodiments 1, 2.

### (Description common to Embodiments 1 to 3)

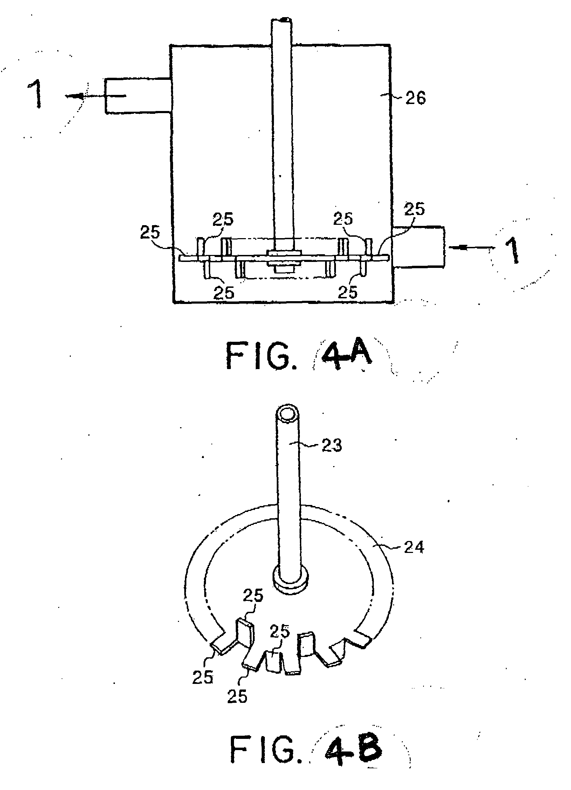

Two liquid shear-stirrers 20 and 21 in Embodiments 1 to 3 have the structure illustrated in Fig.4A, 4B, may be used. The liquid shear-stirrer shown in Fig. 4A, 4B has a rotating shaft 23 having a disk 24 attached thereto and provided with a series of vanes 25, alternately formed directed upwardly, horizontally and downwardly over the entire outer periphery thereof. One example of the size of the liquid shear-stirrers 20,21 in the case of a shear-stirring tank 26 having a height of 400 to 5,000 mm and a diameter of 200 mm is suitably such that the disk 24 has a diameter on the order of 100 to 150 mm, the vane 25 has a length on the order of 10 to 20 mm and a width on the order of 10 mm. The number of rotations of two liquid shear-stirrers 20, 21 may vary depending on the material to be treated, type of the machine, kind of flocculating agent and the like but is preferably selected from the range on the order of 200 to 2, 000 rpm, and more preferably in the range of 1,000 to 1,800 rpm.

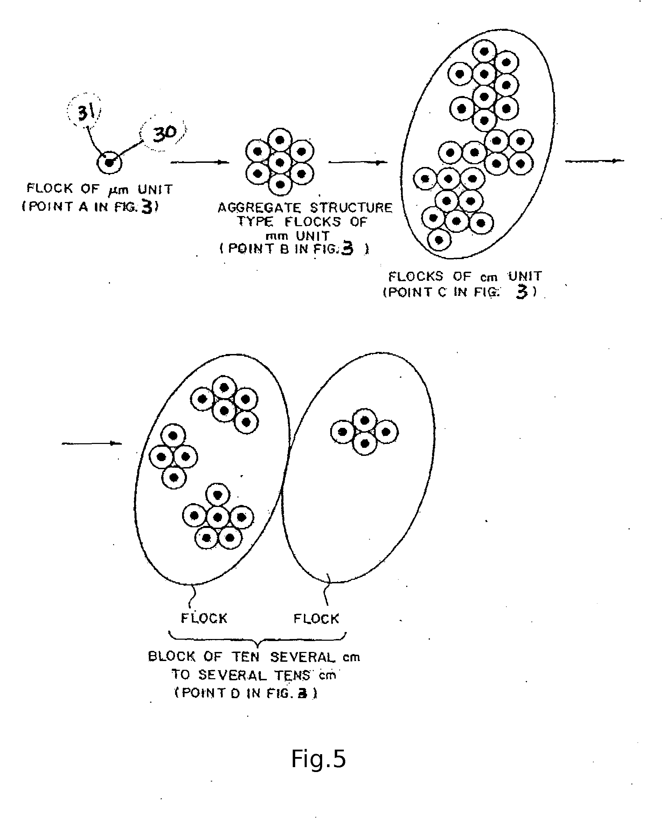

In Fig. 3, two liquid shear-stirrers are arranged and by sheax-stirring by use of the first liquid shear-stirrer 20 , sludge 31 (Fig. 5) adheres around fine particulates of flocculating agent 30 (Fig. 5) at the point A in Fig. 3 to form flocks having a size of µm unit (Fig. 5), which are further shear-stirred by the second liquid shear-stirrer 21 so that at point B in Fig. 3, the flocks gather to form aggregate structure type flocks of 1 to 2 mm in size (Fig. 5). Then, between the second liquid shear-stirrer 21 and the solid-liquid separator 5 (point C in Fig. 3), the aggregate structure of the aggregate structure type flocks is established and many such aggregate structure type flocks gather to form blocks of several centimeters (cm) to several tens centimeters (cm) in size (Fig. 5) at point D in Fig. 3.

In the embodiments of the present invention, as described above, the sludge to which the flocculating agent has been added is shear-stirred by use of a liquid shear-stirrer 20, 21 instead of a stirring pump, and this makes the sludge and flocculating agent in a fine particulate state, so that the flocculating agent can be dispersed, diffused or distributed throughout the sludge. This results in that the flocculating agent flocculates dissolved solid, suspended solid and fine floating solid in the sludge to form flocks, flocks of aggregate structure type and blocks in the sludge treatment line 1. The flocks, flocks of aggregate structure type and blocks are separated into solid and liquid by the solid-liquid separator 5 in the sludge treatment line 1.

In Embodiment illustrated in Fig. 3 as well, the distance from the first flocculating agent injection part 3 to the first liquid shear-stirrer 20, the distance from the second flocculating agent injection part 4 to the second liquid shear-stirrer 21, and the distance from the second liquid shear-stirrer 21 to the solid-liquid separator 5 may vary depending on the kind of the flocculating agent, the quality, quantity of flow and flow rate of sludge. For this reason, as in the case of Embodiment 1 illustrated in Fig. 1, the distances are set to distances such that the flocculating agent can pass through the apparatuses in a reaction initiation time obtained in advance for each flocculating agent; from experience, this distance is about 0.2 to 0.6 m.

Also, the distance from the first liquid shear-stirrer 20 to the second flocculating agent injection part 4 in Embodiments illustrated in Fig 1,3, the distance from the second flocculating agent injection part 4 to the second liquid shear-stirrer 21 in Fig.3 and the distance from the second liquid shear-stirrer 21 to the solid-liquid separator 5 are set to distances up to positions such that the flocculation strengths of flocks calculated based on the flocculation lasting periods of time of flocks formed after the sheax-stirring by the first liquid shear-stirrer 20 and aggregate structure type flocks formed after the shearing by the second liquid shear-stirrer 21 are maximum. From experience, these distances are suitably 1 to 10 m, preferably about 3 to 7 m. In the case where the distance of the above-mentioned section is 1 to 10 m and the flow rate of the sludge flowing in the sludge treatment line 1 is 1 m/s, the residence time of the sludge in the above-mentioned section is 10 to 60 seconds, preferably about 15 to 30 seconds.

### Industrial Availability

The processes for treating sludge of the present invention have various effects as follows.
(1) Since flocculating agent-added sludge is shear-stirred in a fine particulate state by using a liquid shear-stirrer before the flocculation reaction of the flocculating agent is initiated so that a flocculating agent is dispersed, distributed or diffused in a fine particulate state throughout the sludge before the flocculation reaction of the flocculating agent is initiated, the flocculation reaction is efficiently performed to save the flocculating agent and the process is economical.
(2) If two types of flocculating agents, i.e., a cationic flocculating agent for adsorbing components having negative charge and an anionic flocculating agent for adsorbing components having positive charge are used, the components having negative or positive charge in the sludge can be adsorbed to form flocks.
(3) Since a liquid shear-stirrer is used in a sludge treatment line, a large scale stirrer (flocculating and mixing tank) as a conventional one is no longer necessary, so that the apparatus can be miniaturized and simplified, its handling is easier and place where the apparatus is installed can be small. In addition, running and maintenance costs are reduced, which is economical.
(4) Since a large scale stirrer (flocculating and mixing tank) is unnecessary, a series of treatments can be continuously performed in the treating line, so that sludge can be efficiently and speedily treated. Further, the treating line can be designed to be linear or with a gentle curve, if curved, which makes it easier to construct a treating line suitable for achieving a laminar flow.
(5) Since flocks are separated into a solid component and a liquid component by use of a solid-liquid separator, the subsequent treatments can be performed with ease.
(6) Since the distance from the first flocculating agent injection part to the liquid shear-stirrer is set to a distance such that the flocculating agent can pass through the apparatuses in a reaction initiation time for each flocculating agent, the flocculating agent can be dispersed, distributed or diffused in a fine particulate state throughout the sludge before the flocculation reaction of the flocculating agent is initiated.
(7) By shear-stirring by use of a liquid shear-stirrer, the flocculating agent can be dispersed, diffused or distributed in a fine particulate state, so that flocculation reaction can be efficiently performed to save the flocculating agent (20 to 50% reduction), which is economical.
(8) Since the liquid shear-stirrer is an atomizing apparatus which is simple in construction, efficient and economical, the sludge treating equipment as a whole is made simple, miniaturized, and easy in handling and requires only a small space for installment. In addition, it shows good stirring efficiency and incurs less running and maintenance costs, which is economically suitable.
(9) Since the flocculating agent is rendered in a fine particulate state by the liquid shearing type stirrer and uniformly diffused throughout the sludge and broad dispersion is performed such that the fine particulates are distributed in every portions, the efficiency of flocculation is high, and saving of the use amount of the flocculating agent can be achieved. Also, flocks that are dense, have strong cohesive force, and are hard and less water-swollen can be formed so that they are separated from water efficiently by the solid-liquid separator so that they can provide hydrated cake which is lower (by about 5 to 10%) in moisture content than that of the conventional dehydrated cake, thus decreasing the amount of dehydrate cakes produced. Since the dehydrated cake has a low moisture content, the moisture controlling agent for preparing compost material can be saved so that the process of the present invention is economical. Furthermore, loss of unreacted flocculating agent to the treating plant is minimized so that the entire water area can be biologically activated as a site for purification so that the process of the present invention is most suitable for environment protection.
(10) Since shear-stirring is performed by use of a liquid shear-stirrer, aggregate structure type flocks that are dense, hard and less water-swollen can be formed. As a result, dehydrated cakes that show high water separating property, high dehydration rate by use of a hydroextractor and low water content can be obtained. From the experiments, the water content of dehydrated cakes is in the range of 68 to 75%, which indicates that a reduction in water content of about 5 to 8% as compared with products produced by competitors.

## Claims

1. A process for treating sludge, in a treating sludge system having a sludge supply pump (6) introducing a sludge from a raw water tank (7) and a liquid shear-stirrer(20) provided downstream of the sludge supply pump(6)and a shear-stirring tank (26) accommodating the rotatable liquid shear -stirrer (20)and a solid-liquid separator (5) positioned downstream of the liquid shear-stirrer (20), connected together by a pipe to construct a sludge treatment line (1) and the liquid shear-stirrer (20) having a rotating shaft (23) having a disk (24) attached thereto and provided with a series of vanes (25), formed directed upwardly, horizontally and downwardly; comprising the steps of:
adding to sludge flowing in the sludge treatment line (1) a flocculating agent for flocculating various materials in the sludge, at a flocculating agent injection part (3) positioned upstream of the liquid shear-stirrer (20)of the sludge treatment line (1);
shear-stirring the flocculating agent-added sludge flowing in the sludge treatment line (1) by rotating the liquid shear-stirrer (20) at a speed of 200 to 2000rpm in the shear-stirring tank (26) prior to initiation of flocculation reaction of the flocculating agent to make the flocculating agent-added sludge in a fine particulate state, dispersing, diffusing or distributing the flocculating agent throughout the sludge in the sludge treatment line (1)
allowing the sludge in a fine particulate state to form flocks in a particle state as a result of the flocculation reaction of the flocculating agent;
adjusting the treating line in which the waste water flows such that wastewater flows in a laminar flow during the flocculation reaction; and
separating the flocks into a solid and liquid by the solid-liquid separator (5).

2. A process for treating sludge according to claim 1, wherein a first flocculating agent injection part (3) and a second flocculating agent injection part (4) are arranged in the sludge treatment line (1), the first flocculating agent injection part (3) is positioned upstream of the liquid shear-stirrer (20),and a second flocculating agent injection part (4) is arranged downstream of the liquid shear-stirrer(20); comprising:
adding to the sludge a second flocculating agent at the second flocculating agent injection part (4).

3. A process for treating sludge according to claim 2, wherein a second liquid shear-stirrer (21) is provided downstream of the second flocculating agent injection part (4), comprising, after adding the second flocculating agent, shear-stirring the flocculating agent-added sludge flowing in the sludge treatment line (1) by rotating the second liquid shear-stirrer (21) at a speed of 200 to 2000rpm to make the flocculating agent-added sludge in a fine particulate state to disperse, diffuse or distribute the first flocculating agent throughout the sludge in the sludge treatment line (1).

## Patentansprüche

1. Verfahren zur Behandlung von Schlamm in einer Schlammbehandlungsanlage, die eine Schlammzufuhrpumpe (6), die einen Schlamm aus einem Rohwassertank (7) einleitet, und ein Flüssigkeitsscherrührwerk (20), das stromabwärts von der Schlammzufupumpe (6) bereitgestellt wird, und einen Scherrührtank (26), der das drehbare Flüssigkeitsscherrührwerk (20) aufnimmt, und einen Fest-Flüssig-Separator (5), der stromabwärts von dem Flüssigkeitsscherrührwerk (20) angeordnet ist, hat, miteinander verbunden durch ein Rohr, um eine Schlammbehandlungslinie (1) aufzubauen, und wobei das Flüssigkeitsscherrührwerk (20) eine rotierende Welle (23) hat, die eine Scheibe (24) hat, die an derselben befestigt ist und mit einer Reihe von Schaufeln (25) versehen ist, die nach oben, in Horizontalrichtung und nach unten gerichtet geformt sind, wobei das Verfahren die folgenden Schritte umfasst:
Zusetzen eines Flockungsmittels zu dem in der Schlammbehandlungslinie (1) fließenden Schlamm, um verschiedene Materialien in dem Schlamm anszuflocken, an einem Flockungsmittel-Einspritzteil (3), der stromaufwärts von dem Flüssigkeitsscherrührwerk (20) der Schlammbehandlungslinie (1) angeordnet ist,
Scherrühren des in der Schlammbehandlungslinie (1) fließenden Schlamms mit zugesetztem Flockungsmittel durch Drehen des Flüssigkeitsscherrührwerks (20) mit einer Drehzahl von 200 bis 2000 U/min in dem Scherrührtank (26) vor der Einleitung der Ausflockungsreaktion des Flockungsmittels, um den Schlamm mit zugesetztem Flockungsmittel in einen feinteiligen Zustand zu bringen, wobei das Flockungsmittel in dem gesamten Schlamm in der Schlammbehandlungslinie (1) dispergiert, diffundiert oder verteilt wird,
Ermöglichen, dass der Schlamm in einem feinteiligen Zustand im Ergebnis der Ausflockungsreaktion des Flockungsmittels Flocken in einem Teilchenzustand bildet,
Einstellen der Behandlungslinie, in der das Abwasser fließt, derart, dass das Abwasser während der Ausflockungsreaktion in einer laminaren Strömung fließt, und
Trennen der Flocken in einen Feststoff und eine Flüssigkeit durch den Fest-Flüssig-Separator (5).

2. Verfahren zur Behandlung von Schlamm nach Anspruch 1, wobei ein erster Flockungsmittel-Einspritzteil (3) und ein zweiter Flockungsmittel-Einspritzteil (4) in der Schlammbehandlungslinie (1) angeordnet sind, der erste Flockungsmittel-Einspritzteil (3) stromaufwärts von dem Flüssigkeitsscherrührwerk (20) angeordnet ist und ein zweiter Flockungsmittel-Einspritzteil (4) stromabwärts von dem Flüssigkeitsscherrührwerk (20) angeordnet ist, wobei das Verfahren Folgendes umfasst:
Zusetzen eines zweiten Flockungsmittels zu dem Schlamm an dem zweiten Flockungsmittel-Einspritzteil (4).

3. Verfahren zur Behandlung von Schlamm nach Anspruch 2, wobei ein zweites Flüssigkeitsscherrübrwerk (21) stromabwärts von dem zweiten Flockungsmittel-Einspritzteil (4) bereitgestellt wird, wobei das Verfahren Folgendes umfasst: nach dem Zusetzen des zweiten Flockungsmittels Scherrühren des in der Schlammbehandlungslinie (1) fließenden Schlamms mit zugesetztem Flockungsmittel durch Drehen des zweiten Flüssigkeitsscherrührwerks (21) mit einer Drehzahl von 200 bis 2000 U/min, um den Schlamm mit zugesetztem Flockungsmittel in einen feinteiligen Zustand zu bringen, um das erste Flockungsmittel in dem gesamten Schlamm in der Schlammbehandlungslinie (1) zu dispergieren, zu diffundieren oder zu verteilen.

## Revendications

1. Procédé de traitement de boue dans un système de traitement de boue, comportant une pompe d'alimentation de la boue (6), introduisant une boue provenant d'un réservoir d'eau brute (7), et un agitateur à cisaillement de liquide (20) agencé en aval de la pompe d'alimentation de la boue (6), un réservoir d'agitation à cisaillement (26) recevant l'agitateur à cisaillement de liquide rotatif (20) et un séparateur des solides et des liquides (5), positionné en aval de l'agitateur à cisaillement de liquide (20), connectés les uns aux autres par un tuyau pour construire une chaîne de traitement de la boue (1), l'agitateur à cisaillement de liquide (20) comportant un arbre rotatif (23) comportant un disque (24) qui y est fixé, et comportant une série d'aubes (25) formées de sorte à être dirigées vers le haut, dans une direction horizontale et vers le bas, comprenant les étapes ci-dessous :
addition à la boue s'écoulant dans une chaîne de traitement de la boue (1) d'un agent de floculation, pour entraîner la floculation de différents matériaux dans la boue, au niveau d'une partie d'injection de l'agent de floculation (3) positionnée en amont de l'agitateur à cisaillement de liquide (20) de la chaîne de traitement de la boue (1) ;
agitation à cisaillement de la boue additionnée de l'agent de floculation s'écoulant dans la chaîne de traitement de la boue (1) en faisant tourner l'agitateur à cisaillement de liquide (20) à une vitesse comprise entre 200 et 2000 tours par minute dans le réservoir d'agitation à cisaillement (26), avant l'initialisation de la réaction de floculation de l'agent de floculation, pour conférer à la boue additionnée de l'agent de floculation un état particulaire fin, pour disperser, diffuser ou distribuer l'agent de floculation à travers la boue dans la chaîne de traitement de la boue (1) ;
formation par la boue dans un état particulaire fin de flocons dans un état particulaire, par suite de la réaction de floculation de l'agent de floculation ;
ajustement de la chaîne de traitement dans laquelle s'écoulent les eaux usées, de sorte que les eaux usées s'écoulent dans un écoulement laminaire au cours de la réaction de floculation ; et
séparation des flocons en solides et liquides par le séparateur des solides et des liquides (5).

2. Procédé de traitement de boue selon la revendication 1, dans lequel une partie d'injection d'un premier agent de floculation (3) et une partie d'injection d'un deuxième agent de floculation (4) sont agencées dans la chaîne de traitement de la boue (1), la partie d'injection du premier agent de floculation (3) étant positionnée en amont de l'agitateur à cisaillement du liquide (20) et la partie d'injection du deuxième agent de floculation (4) étant agencée en aval de l'agitateur à cisaillement de liquide (20), comprenant l'étape ci-dessous :
addition à la boue d'un deuxième agent de floculation au niveau de la partie d'injection du deuxième agent de floculation (4).

3. Procédé de traitement de boue selon la revendication 2, dans lequel un deuxième agitateur à cisaillement de liquide (21) est agencé en aval de la partie d'injection du deuxième agent de floculation (4), comprenant, après l'étape d'addition du deuxième agent de floculation, l'étape d'agitation à cisaillement de la boue additionnée de l'agent de floculation s'écoulant dans la chaîne de traitement de la boue (1) en faisant tourner le deuxième agitateur à cisaillement de liquide (21) à une vitesse comprise entre 200 et 2000 tours par minute, pour conférer à la boue additionnée de l'agent de floculation un état particulaire fin, pour disperser, diffuser ou distribuer le premier agent de floculation à travers la boue dans la chaîne de traitement de la boue (1).
